# EUROPÄISCHE PATENTANMELDUNG

(11) **EP 3 229 141 A1**
(43) Veröffentlichungstag der Anmeldung: **11.10.2017**
(21) Anmeldenummer: 16164293.9
(22) Anmeldetag: 07.04.2016
(51) Int. Cl.: G06F 11/20, G05B 19/042

(54) **VERFAHREN ZUR ERHÖHUNG DER VERFÜGBARKEIT EINES REDUNDANTEN AUTOMATISIERUNGSSYSTEMS SOWIE REDUNDANTES AUTOMATISIERUNGSSYSTEM**

(71) Anmelder: Siemens Aktiengesellschaft, 80333 München (DE)
(72) Erfinder: Grosch, Thomas, 90574 Roßtal (DE); Laforsch, Jürgen, 77815 Bühl (DE); Renschler, Albert, 76275 Ettlingen (DE)

(57) **Zusammenfassung**

Verfahren zur Erhöhung der Verfügbarkeit eines redundanten Automatisierungssystems sowie redundantes Automatisierungssystem

Es wird ein Verfahren sowie ein redundantes Automatisierungssystem bereitgestellt, welche zur Verwirklichung bzw. Beherrschung einer Vielzahl von Betriebsmodi vorbereitet sind, wodurch die Verfügbarkeit des Automatisierungssystems erhöht wird.

## Beschreibung

Die Erfindung betrifft ein Verfahren zur Erhöhung der Verfügbarkeit eines redundanten Automatisierungssystems sowie ein redundantes mit zwei Teilsystemen versehenes Automatisierungssystem, wobei eines der Teilsysteme die Masterfunktion und das andere Teilsystem die Slave-Funktion übernimmt und für den Fall, dass das eine Teilsystem ausfällt, das andere Teilsystem die Master-Funktion übernimmt.

Ein redundantes Automatisierungssystem ist z. B. aus der EP 0 907 912 B1 bekannt. Dort sind zwei Teilsysteme zeitlich synchron gekoppelt, wobei an geeigneten Programmstellen, an denen ein Abgleich vorgesehen ist, beide Teilsysteme auf eine Antwort des jeweils anderen Teilsystems warten und erst dann jeweils ihre Programmverarbeitung zeitlich synchron fortsetzen.

EP 2 657 797 A1 offenbart ein weiteres redundantes Automatisierungssystem mit zwei Teilsystemen, die zeitlich asynchron gekoppelt sind. Eines der Teilsysteme fungiert als Master und das andere Teilsystem als Slave, wobei die Teilsysteme Programme zeitlich asynchron verarbeiten, indem das Slave-Teilsystem durch das Master-Teilsystem freigegebene Programmpfade oder Programmteile verarbeitet.

Sowohl das bekannte synchron gekoppelte als auch das bekannte asynchron gekoppelte Automatisierungssystem sind nicht vorbereitet, um eine Vielzahl von Betriebsmodi verwirklichen zu können. Beispielsweise kann ein Betriebsmodus "Lokalisierung eines Fehlers in den Teilsystemen nicht verwirklicht werden, weil es nicht möglich ist, einen Fehler im Automatisierungssystem ohne aufwendige, hardware-abhängige Selbst-Diagnose zu detektieren und diesen einem der beiden Teilsysteme zuzuordnen. Auch ein Betriebsmodus "Aufdaten eines der Teilsystems im Rahmen einer Aufdatphase bzw. Reintegration eines neuen Teilsystems nach dem Austauschen eines defekten Teilsystems" wirkt sich in dem jeweiligen synchron oder asynchron gekoppelten Automatisierungssystem nachteilig auf einen zu steuernden technischen Prozess aus.

Der Erfindung liegt daher die Aufgabe zugrunde, ein Verfahren zur Erhöhung der Verfügbarkeit eines redundanten mit zwei Teilsystemen versehenen Automatisierungssystems bereitzustellen. Darüber hinaus ist ein redundantes Automatisierungssystem der eingangs genannten Art zu schaffen, welches zur Erhöhung der Verfügbarkeit des Automatisierungssystems vorbereitet ist.

Im Hinblick auf das Verfahren wird diese Aufgabe durch die im Anspruch 1, bezüglich des redundanten Automatisierungssystems durch die im Anspruch 11 angegebenen Maßnahmen gelöst.

Vorteilhaft ist, dass ein Verfahren sowie ein redundantes Automatisierungssystem bereitgestellt werden, welche zur Verwirklichung bzw. Beherrschung einer Vielzahl von Betriebsmodi vorbereitet sind, wodurch die Verfügbarkeit des Automatisierungssystems erhöht wird.

In einer Ausgestaltung der Erfindung ist vorgesehen, dass der Betriebsmodus die Lokalisierung eines Fehlers in den Teilsystemen ist, wobei die Verarbeitungseinheiten jedes Teilsystems dazu ausgebildet sind, in der synchronen Betriebsart Verarbeitungsergebnisse zu vergleichen. Dadurch wird eine "hardwareunabhängige Selbstdiagnose" verwirklicht, wobei ein wesentliches Gütekriterium des redundanten Automatisierungssystems erfüllt ist und zwar zu lokalisieren, welches der beiden Teilsystem fehlerbehaftet ist. Fehler können mit einer sehr hohen Wahrscheinlichkeit richtig lokalisiert werden, wodurch ein hoher "Diagnostic Coverage" - ohne detaillierte Hardware-Betrachtungen - sichergestellt wird. Für den Fall, dass das Vergleichsergebnis eines der Teilsysteme auf einen Fehler hinweist, übernimmt das andere Teilsystem die Master-Funktion und die Prozesssteuerung.

In einer weiteren Ausgestaltung der Erfindung gemäß den im Anspruch 3 angegebenen Maßnahmen repräsentiert der Betriebsmodus "ein Aufdaten des einen oder des anderen Teilsystems im Rahmen einer Aufdatphase". Dies ermöglicht einen "Austausch bzw. ein Ersetzen eines defekten Teilsystems und eine Reintegration eines neuen Teilsystems". Die Prozesssteuerung wird dabei von einem Solobetrieb eines der Teilsysteme in einen redundanten Steuerbetrieb mit dem neuen Teilsystem überführt, wobei relevante Daten im Rahmen einer Aufdatphase von dem einen Teilsystem dem neuen "aufzudatenden" Teilsystem übermittelt werden. Vorteilhaft ist, dass die Reintegration des neuen Teilsystems sich nicht störend auf den zu steuernden Prozess auswirkt.

Mittels der im Anspruch 4 angegebenen Maßnahmen wird der Betriebsmodus "Updaten der Firmware in den Verarbeitungseinheiten der Teilsysteme" verwirklicht, wobei ein Firmware-Update in den Verarbeitungseinheiten der beiden Teilsysteme im redundanten Betrieb ermöglicht wird, was eine Erhöhung der Verfügbarkeit des Automatisierungssystems bedeutet.

Gemäß der im Anspruch 5 angegebenen Maßnahmen ist der Betriebsmodus "ein Lokalisieren und Beheben von transienten Fehler", wobei transiente Fehler, z. B. Softerrors in Registern oder Logikeinheiten der Verarbeitungseinheiten der Teilsysteme, lokalisiert und behoben werden können. Transiente Fehler werden "beherrscht" und der redundante Betrieb im Wesentlichen ohne Verzögerungen fortgesetzt.

Gemäß der im Anspruch 6 angegebenen Maßnahmen können transiente Fehler lokalisiert und behoben werden, die sich noch nicht auf die Prozesssteuerung ausgewirkt haben und latent in einem Arbeitsspeicher eines der Teilsysteme vorhanden sind. Beispielsweise repräsentieren Softerrors in Speicherzellen, die seit der Verfälschung noch nicht benutzt wurden und in denen ein fehlerhaftes Datum hinterlegt ist, einen derartigen transienten Fehler. Während der Korrektur bzw. der Behebung eines solchen Fehlers wird der redundante Betrieb aufrechterhalten.

In einer Ausführungsform gemäß der im Anspruch 7 angegebenen Maßnahmen wird ermöglicht, eine defekte Master- oder Slave-Verarbeitungseinheit des Master- oder Slave-Teilsystems zu lokalisieren. Das Teilsystem, welches die als defekt erkannte Verarbeitungseinheit aufweist, bleibt mit dem anderen Teilsystem im redundanten Betrieb, wodurch der Ausfall dieser Verarbeitungseinheit sich nicht störend auf den zu steuernden technischen Prozess auswirkt.

Mittels der im Anspruch 8 oder Anspruch 9 formulierten Maßnahmen wird im redundanten Betrieb der beiden Teilsysteme der Austausch des Master- oder des Reserve-Teilsystems ermöglicht. Die Reparatur eines defekten bzw. fehlerhaften Master- oder Reserve-Teilsystems während der Prozesssteuerung ist dadurch sichergestellt.

In einer besonders vorteilhaften Ausgestaltung der Erfindung ist vorgesehen, auch die beiden Teilsysteme für eine synchrone Kopplung dieser beiden Teilsysteme auszubilden, wobei in der synchronen Betriebsart die Programmpfade in den Teilsystemen zeitlich synchron durchlaufen werden, indem an Programmstellen, an denen ein Abgleich vorgesehen ist, beide Teilsysteme auf eine Antwort des jeweils anderen Teilnehmers warten und erst dann jeweils ihre Programmverarbeitung fortsetzen, wobei in Abhängigkeit des Betriebsmodus die Teilsysteme für die synchrone oder asynchrone Betriebsart konfigurierbar sind. Dadurch können Betriebsmodi verwirklicht werden, für welche eine synchrone Kopplung erforderlich ist.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:

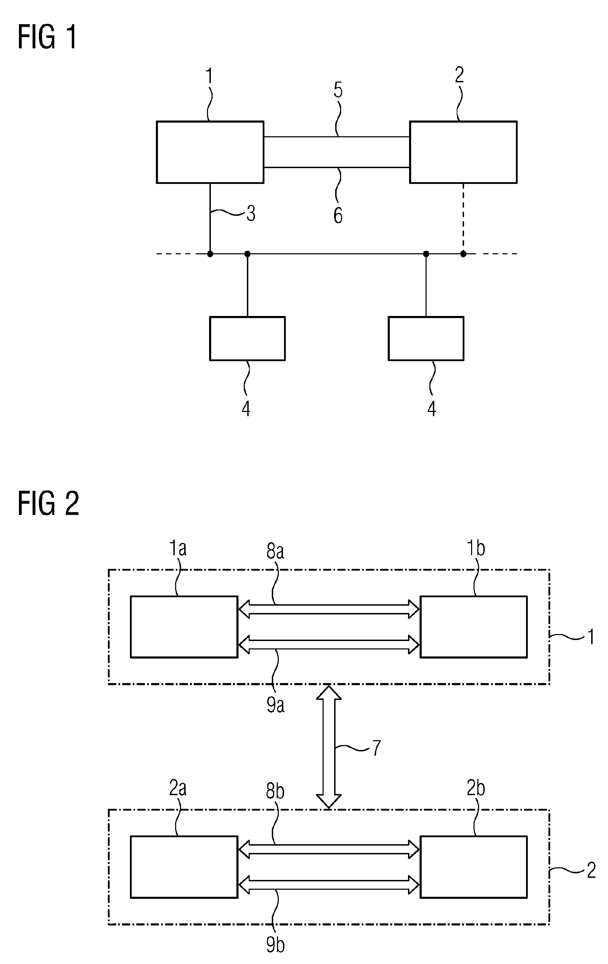

Figuren 1 bis 3 redundante Automatisierungssysteme.

Die in den Figuren 1 bis 3 gleichen Teile sind mit gleichen Bezugszeichen versehen.

In Figur 1 sind mit 1 und 2 ein erstes und ein zweites Teilsystem eines redundanten Automatisierungssystems AS bezeichnet, die über einen Feldbus 3 mit Peripherieeinheiten 4 verbunden sind. Dabei genügt der Feldbus 3 beispielsweise der PROFIBUS-DP-Spezifikation. Prinzipiell sind auch andere Bussysteme, z. B. Ethernet (ProfiNet Systemredundanz), Modbus oder aber auch parallele Bussysteme geeignet. Die Peripherieeinheiten 4 erhalten über Eingangsleitungen Signale von Messumformern oder Messwertgebern, die zur Erfassung eines Prozesszustands dienen, und geben über Ausgangsleitungen Signale an Stellglieder aus, mit welchen der Prozess beeinflusst wird. Der Prozess sowie die Messumformer, Messwertgeber und Stellglieder sind in der Figur der Übersichtlichkeit wegen nicht dargestellt. Die beiden Teilsysteme 1, 2 verarbeiten dasselbe Steuerprogramm, wobei eines der Teilsysteme 1, 2 die Master-Funktion (Masterschaft) und das andere Teilsystem 1, 2 die Slave-Funktion übernimmt, wobei nur das Teilsystem 1, 2 lesend und/oder schreibend auf die Peripherieeinheiten zugreift, das die Master-Funktion ausübt bzw. als Master fungiert. Für den Fall, dass das als Master fungierende Teilsystem 1, 2 ausfällt, übernimmt das andere Teilsystem 1, 2 die Master-Funktion. Um zu ermöglichen, dass beide Teilsysteme 1, 2 ihre jeweiligen Steuerprogramme bzw. Programmpfade dieser Steuerprogramme zeitlich asynchron verarbeiten, synchronisieren diese sich über zwei Synchronisationsverbindungen 5, 6 wobei die Redundanz- und Überwachungsfunktionen über diese beiden Synchronisationsverbindungen 5, 6 verwirklicht werden. Die zeitlich asynchrone Verarbeitung der Steuerprogramme bzw. der Programmpfade erfolgt derart, dass das als Slave bzw. als Reserve fungierende Teilsystem 1, 2 nur durch das als Master fungierende Teilsystem 1, 2 freigegebene Programmpfade durchläuft. Im Hinblick auf solche zeitlich asynchrone Durchläufe - im Folgenden auch als "asynchron gekoppelte Teilsysteme" oder als "asynchrone Betriebsart" bezeichnet - wird dazu auf die EP 2 657 797 A1 der Anmelderin verwiesen.

Die Teilsysteme 1, 2 weisen jeweils zwei Verarbeitungseinheiten bzw. zwei lokale CPUs auf, die sowohl für eine zeitlich asynchrone als auch synchrone Kopplung ausgebildet sind. In Rahmen der synchronen Kopplung bzw. synchronen Betriebsart werden die Steuerprogramme bzw. Programmpfade dieser Steuerprogramme zeitlich synchron durchlaufen, indem an Programmstellen, an denen ein Abgleich vorgesehen ist, beide Verarbeitungseinheiten auf eine Antwort der jeweils anderen Verarbeitungseinheit warten und erst dann jeweils ihre Programmverarbeitung fortsetzen. Selbstverständlich weisen die Teilsysteme 1, 2 weitere Funktions-Module bzw. Funktions-Baugruppen auf, beispielsweise Stromversorgungen, Kommunikations-Baugruppen, weitere I/O-Baugruppen oder sonstige für die Prozesssteuerung geeignete Baugruppen.

Der Einfachheit halber werden im Folgenden
- für das Teilsystem, welches als Master bzw. Master-Teilsystem fungiert, wobei dieses Teilsystem eine hochverfügbare CPU bzw. H-CPU repräsentiert, der Begriff "Master-CPU",
- für das Teilsystem, welches als Slave bzw. Slave-Teilsystem fungiert, wobei dieses Teilsystem ebenfalls eine hochverfügbare CPU bzw. H-CPU repräsentiert, der Begriff "Reserve-CPU",
- für die Verarbeitungseinheit, die innerhalb eines der Teilsysteme als Master fungiert, der Begriff "Master-Verarbeitungseinheit" und
- für die Verarbeitungseinheit, die innerhalb eines der Teilsysteme als Slave fungiert, der Begriff "Slave-Verarbeitungseinheit" benutzt.

Figur 2 zeigt in stark vereinfachter Form die Kopplung der Teilsysteme 1, 2 des redundanten Automatisierungssystems AS, wobei im vorliegenden Beispiel das Teilsystem 1 als Master-CPU 1 und das Teilsystem 2 als Reserve-CPU 2 fungiert. Sowohl die Master-CPU 1 als auch die Reserve-CPU 2 weisen jeweils zwei lokale Verarbeitungseinheiten 1a, 1b, 2a, 2b auf, von denen jeweils eine lokal - als innerhalb der jeweiligen CPU 1, 2 - als Master- oder als Slave-Verarbeitungseinheit arbeitet. Die Master- und die Reserve-CPU 1, 2 sind im vorliegenden Beispiel für eine asynchrone Betriebsart eingestellt bzw. konfiguriert, was in der Zeichnung mittels Bezugszeichen 7 dargestellt ist. Ferner sind im vorliegenden Beispiel die Verarbeitungseinheiten 1a, 1b der Master-CPU 1 und die die Verarbeitungseinheiten 2a, 2b der Reserve-CPU 2 je nach eingestelltem Betriebsmodus entweder für eine asynchrone oder eine synchrone Kopplung konfiguriert, was in der Zeichnung mittels Bezugszeichen 8a, 8b, 9a, 9b veranschaulicht ist. Um sicherzustellen, dass auch ein Betriebsmodus verwirklicht werden kann, für welchen eine synchrone Kopplung erforderlich ist, können die Master- und die Reserve-CPU 1, 2 auch für eine synchrone Kopplung dieser beiden CPUs 1, 2 konfiguriert werden.

Als Betriebsmodi sind insbesondere vorgesehen:
a) die Lokalisierung eines Fehlers in der Master- und in der Reserve-CPU 1, 2, wobei dazu sowohl die Verarbeitungseinheiten 1a, 1b der Master-CPU 1 als auch die Verarbeitungseinheiten 2a, 2b der Reserve-CPU 2 synchron gekoppelt werden und wobei die Master-CPU 1 und die Reserve-CPU 2 asynchron gekoppelt werden;
b) ein Aufdaten der Master-CPU 1 oder der Reserve-CPU 2 im Rahmen einer Aufdatphase, wobei dazu die Master-CPU 1 und die Reserve-CPU 2 und wobei ferner sowohl die Verarbeitungseinheiten 1a, 1b der Master-CPU 1 asynchron gekoppelt werden und die Verarbeitungseinheiten 2a, 2b der Reserve-CPU 2 synchron gekoppelt werden;
c) ein Updaten der Firmware in den Verarbeitungseinheiten 1a, 1b, 2a, 2b der Master- und der Reserve-CPU 1, 2, wobei sowohl die Verarbeitungseinheiten 1a, 1b der Master-CPU 1 als auch die Verarbeitungseinheiten 2a, 2b der Reserve-CPU 2 synchron gekoppelt und wobei die Master-CPU 1 und die Reserve-CPU 2 asynchron gekoppelt werden;
d) ein Lokalisieren und Beheben von transienten Fehlern in der Master- und in der Reserve-CPU 1, 2, wobei die Master-CPU 1 und die Reserve-CPU 2 asynchron gekoppelt werden;
e) ein Lokalisieren einer defekten Master- oder Slave-Verarbeitungseinheit 1a, 1b, 2a, 2b der Master- oder der Reserve-CPU 1, 2, wobei die Master-CPU 1 und die Reserve-CPU 2 asynchron gekoppelt werden;
f) ein Austauschen der Master- oder der Reserve-CPU 1, 2, wobei die Master-CPU 1 und die Reserve-CPU 2 asynchron gekoppelt werden.

Zur Verwirklichung des Betriebsmodus a) "Lokalisierung eines Fehlers in der Master- und der Reserve-CPU 1, 2" werden die Verarbeitungseinheiten 1a, 1b der Master-CPU 1 und die Verarbeitungseinheiten 2a, 2b der Reserve-CPU 2 jeweils synchron gekoppelt. Die Verarbeitungseinheiten 1a und 1b einerseits und die Verarbeitungseinheiten 2a und 2b andererseits vergleichen ihre jeweils unabhängig voneinander ermittelten Verarbeitungsergebnisse. Stimmen die Ergebnisse auf der Master-CPU 1 nicht überein, so weist dies auf einen lokalen Fehler in der Master-CPU 1 hin. Für den Fall dagegen, dass die Ergebnisse auf der Reserve-CPU 2 nicht übereinstimmen, so weist dies auf einen lokalen Fehler in der Reserve-CPU 2 hin. Fehler können damit mit hoher Wahrscheinlichkeit richtig lokalisiert werden (Master-CPU 1 oder Reserve-CPU 2). Dies stellt einen hohen Diagnostic Coverage sicher, der auch ohne detaillierte HW-Betrachtungen erreicht werden kann.

Im Folgenden wird auf den Betriebsmodus b) "Aufdaten der Master-CPU 1 oder der Reserve-CPU 2 im Rahmen einer Aufdatphase" näher eingegangen:
Maßnahmen bzgl. der Master-CPU 1:
   1. Der redundante Betrieb der lokalen Verarbeitungseinheiten 1a, 1b erfolgt im Rahmen einer asynchronen Kopplung, wobei z. B. die Verarbeitungseinheit 1a der lokale Master und die Verarbeitungseinheit 1b die lokale Reserve bzw. der lokale Slave ist.
   2. Die Master-Verarbeitungseinheit 1a steuert den Prozess.
   3. Das Zustandsabbild für die Reintegration (Aufdaten) wird aus dem Speicherinhalt der Slave-Verarbeitungseinheit 1b erzeugt. Diese wird vorzugsweise dafür kurz angehalten, was den Nachlauf von der Slave-Verarbeitungseinheit 1b zur Master-Verarbeitungseinheit 1a kurzzeitig vergrößert.
   4. Nachdem das Zustandsabbild erzeugt wurde, holt die Slave-Verarbeitungseinheit 1b den Nachlauf zur Master-Verarbeitungseinheit 1a auf.
Maßnahmen bzgl. der Reserve-CPU 2:
   1. Das Zustandsabbild von der Master-Verarbeitungseinheit 1b wird in beide lokale Verarbeitungseinheiten 2a, 2b der Reserve-CPU 2 geladen.
   2. Die lokalen Verarbeitungseinheiten 2a, 2b konsumieren die seit dem Erstellen des Zustandsabbilds gespeicherten Freigaben der Master-CPU 1 im lokalen, synchron gekoppelten, redundanten Betrieb.

Mittels der genannten Maßnahmen wird erreicht, dass sich die Reintegration auch bei großen Speichermengen (großen Mengengerüsten in Master- und Reserve-CPU 1, 2) nicht auf den zu steuernden Prozess auswirkt.

Bezüglich einer näheren Erläuterung des "Aufdatens" in einem asynchron gekoppelten Automatisierungssystem wird auf die EP 2 667 269 B1 der Anmelderin verwiesen.

Im Folgenden wird Bezug genommen auf den Betriebsmodus "Updaten der Firmware in den Verarbeitungseinheiten der Master- und der Reserve-CPU 1, 2", wobei während des Updatens der redundante Betrieb des Automatisierungssystems aufrechterhalten wird.

Folgende Maßnahmen sind vorgesehen:
Schritt 1:
   Master-CPU 1:
      Die Kopplung zwischen der Verarbeitungseinheit 1a und der Verarbeitungseinheit 1b wird aufgelöst. Die Verarbeitungseinheit 1a steuert den Prozess. Die Verarbeitungseinheit 1b ist in STOP.
   Reserve-CPU 2:
      Die Kopplung zwischen der Verarbeitungseinheit 2a und der Verarbeitungseinheit 2b wird aufgelöst. Die Verarbeitungseinheit 2a ist mit der Verarbeitungseinheit 1a asynchron gekoppelt und befindet sich (in der Reserve-Rolle) im redundanten Betrieb. Die Verarbeitungseinheit 2b ist in STOP.
   Schritt 2:
      Die Verarbeitungseinheit 1b und die Verarbeitungseinheit 2b werden mit der neuen FW versehen, welche von einem Engineering-System zuvor geladen wurde.
Schritt 3:
   Die Verarbeitungseinheit 1a und die Verarbeitungseinheit 2a führen z. B. mittels eines Firmware-Update-spezifischen Protokolls die Reintegration von Verarbeitungseinheit 1b bzw. Verarbeitungseinheit 2b durch.
   Die Sequenz ist beendet, wenn der Verarbeitungseinheit 1b und Verarbeitungseinheit 2b alle notwendigen Daten vorliegen um den Prozess zu steuern.
Schritt 4:
   Die Verarbeitungseinheit 1a und die Verarbeitungseinheit 2a gehen in STOP. Die Prozess-Steuerung wir von der Verarbeitungseinheit 1b übernommen. Diese ist asynchron mit der Verarbeitungseinheit 2b gekoppelt und mit dieser im redundanten Betrieb.
Schritt 5:
   Verarbeitungseinheit 1a und Verarbeitungseinheit 2a werden mit der neuen Firmware versehen, welche intern von der Verarbeitungseinheit 1b bzw. 2b umkopiert wird.
Schritt 6:
   Verarbeitungseinheit 1b übergibt der Verarbeitungseinheit 1a alle notwendigen Daten. Analoges gilt für die Verarbeitungseinheiten 2b und 2a.
   Danach besitzen alle vier Verarbeitungseinheiten 1a, 1b, 2a, 2b die neue FW-Version und arbeiten synchron.

Vorteilhaft ist, dass jede Phase des Firmware-Updates im redundanten Betrieb erfolgt. Dies sichert die hohe Verfügbarkeit der Prozesssteuerung. Der "kritische" Teil des Firmware-Updates findet jeweils lokal innerhalb der Master- bzw. der Reserve-CPU 1, 2 statt und die damit verbundenen prozesskritischen Stillstandszeiten sind somit deutlich kürzer als bei anderen Verfahren.

Auch bei Totalausfall einer CPU, z. B. Netz-Aus, führt die andere CPU die Firmware-Update-Sequenz vollständig durch und steuert den Prozess. Damit ermöglicht dieses Verfahren auch einen FW-Update für den Solo- Betrieb, ohne die Prozess-Steuerung zu unterbrechen.

Im Folgenden werden Maßnahmen bzgl. des Betriebsmodus "Lokalisierung und Behebung von transienten Fehlern" aufgezeigt. Es werden transiente Fehler betrachtet, die sich durch den Vergleich der Verarbeitungsergebnisse von beiden Verarbeitungseinheiten detektieren lassen. Typische Vertreter solcher Fehler sind Softerrors in Registern oder Logikeinheiten eines Prozessor-Core.

Grundlegende Vorgehensweise:
- Die Verarbeitungseinheiten 1a und 1b bzw. die Verarbeitungseinheiten 2a und 2b vergleichen ihre Ausgaben über Peripherie- sowie Kommunikations-Schnittstellen.
- Die Master-CPU 1 sendet im asynchronen Betrieb die Ergebnisse ihrer Außenschnittstellen zusammen mit den Daten und Freigaben zur Reserve-CPU 2.

Für den Fall von Abweichungen bzw. Ungleichheiten an Außenschnittstellen auf der Master-CPU 1 sind folgende Maßnahmen vorgesehen:
1. Der Fehler wird durch Vergleich der Außenschnittstellen der lokalen Verarbeitungseinheiten 1a, 1b auf der Master-CPU 1 lokalisiert. Bei einer Ungleichheit zwischen den Verarbeitungseinheiten 1a und 1b bei noch vorhandener Pfadsynchronität wird die Master-CPU 1 kurzzeitig angehalten, der Reserve-CPU 2 wird eine Freigabe bis zu dieser Außenschnittstelle gegeben.
2. Ist die Reserve-CPU 2 an dieser Außenschnittstelle angelangt, so sendet diese ihren Ausgabewert an die Master-CPU 1.
3. Durch Vergleich der beiden Ergebnisse der Verarbeitungseinheiten 1a, 1b mit dem Ergebnis der Reserve-CPU 2 kann der Fehler lokal auf der Master-CPU 1 lokalisiert werden.
4. Der Inhalt des Speichers der fehlerfreien Verarbeitungseinheit 1a, 1b der Master-CPU 1 wird zur fehlerbehafteten Verarbeitungseinheit 1a, 1b der Master-CPU 1 übertragen und damit korrigiert.

Für den Fall von Abweichungen bzw. Ungleichheiten an Außenschnittstellen auf der Reserve-CPU 2:
1. Der Fehler wird durch Vergleich der Außenschnittstellen der lokalen Verarbeitungseinheiten 2a, 2b auf der Reserve-CPU 2 lokalisiert. Die Verarbeitungseinheiten 2a, 2b sind noch pfadsynchron.
2. Die Reserve CPU 2 benutzt die vom Master-System gesendeten Ergebnisse, um die fehlerhafte Verarbeitungseinheit 2a oder 2b zu identifizieren.
3. Der Inhalt des Speichers der fehlerfreien Verarbeitungseinheit 2a bzw. 2b wird zur fehlerbehafteten Verarbeitungseinheit 2a, 2b übertragen und damit korrigiert.

Mittels derartiger Maßnahmen werden transiente Fehler beherrscht und der redundante Betrieb schnellstmöglich fortgesetzt.

In einem weiteren Betriebsmodus "Lokalisierung und Behebung von transienten Fehlern, werden transiente Fehler betrachtet, die sich noch nicht ausgewirkt haben und latent im Arbeitsspeicher der Master- CPU 1 oder der Reserve-CPU 2 vorhanden sind. Typische Vertreter derartiger Fehler sind Softerrors in Speicherzellen, die seit der Verfälschung noch nicht benutzt wurden, jedoch ein fehlerhaftes Datum in sich tragen.

Grundlegende Vorgehensweise:
- Eine vierkanalig synchronisierte Task führt abschnittsweise Speichertests durch. Dies ist alleine schon deshalb vorteilhaft, um die Funktionalität des ECC (Error Correcting Code)-Mechanismus zu erhalten.
- Über jeden Speicherabschnitt wird ein Hash-Wert gebildet, der für den Vergleich der Speicherabschnitte dient.
- Die Master-CPU 1 sendet die lokal ermittelten Hash-Werte zusammen mit den Daten und Freigaben zur Reserve-CPU 2.

Für den Fall von Abweichungen der Hash-Werte auf der Master-CPU 1 sind folgende Maßnahmen vorgesehen:
1. Die Master-CPU 1 wird kurzzeitig angehalten, der Reserve-CPU 2 wird eine Freigabe bis zu diesem Abschnitt des Speichertests erteilt.
2. Ist die Reserve-CPU 2 an diesem Testabschnitt angelangt, so sendet diese ihren Hash-Wert an die Master-CPU 1.
3. Durch Vergleich der beiden Ergebnisse von der Verarbeitungseinheit 1a und der Verarbeitungseinheit 1b mit dem Ergebnis der Reserve-CPU 2 kann der Fehler lokal auf der Master-CPU 1 lokalisiert werden.
4. Der Inhalt des Speichers der fehlerfreien Verarbeitungseinheit 1a oder 1b wird lokal auf der Master-CPU 1 zur fehlerbehafteten Verarbeitungseinheit 1a oder 1b übertragen. Der Fehler ist damit korrigiert.

Für den Fall von Abweichungen der Hash-Werte auf der Reserve-CPU 2 sind folgende Maßnahmen vorgesehen:
1. Die Reserve-CPU 2 benutzt die von der Master-CPU 1 gesendeten Hash-Werte, um die fehlerhafte Verarbeitungseinheit 2a oder Verarbeitungseinheit 2b zu ermitteln.
2. Der Inhalt des Speichers der fehlerfreien Verarbeitungseinheit 2a oder Verarbeitungseinheit 2b wird lokal auf der Reserve-CPU 2 zur fehlerbehafteten Verarbeitungseinheit 2a oder Verarbeitungseinheit 2b übertragen. Der Fehler wird damit korrigiert.

Die erläuterten Maßnahmen ermöglichen die Korrektur von transienten Fehlern im Arbeitsspeicher des Systems, bevor sich diese in einem fehlerhaften Verhalten auswirken. Der redundante Betrieb wird stets aufrechterhalten.

Im Folgenden wird die Verwirklichung des Betriebsmodus "Lokalisieren einer defekten Master- oder Slave-Verarbeitungseinheit 1a, 1b, 2a, 2b der Master- oder der Reserve-CPU 1, 2" betrachtet.

Ein Hardware-Fehler einer Verarbeitungseinheit 1a, 1b, 2a, 2b führt zum Ausfall oder zum Fehlverhalten dieser Verarbeitungseinheit 1a, 1b, 2a, 2b. Dies wird durch evtl. wiederholtes Anwenden von Vorgehensweise der Maßnahmen "zur Lokalisierung von transienten Fehlern" erkannt und lokalisiert. Die fehlerhafte Verarbeitungseinheit 1a, 1b, 2a, 2b wird stillgelegt. Das die fehlerhafte Verarbeitungseinheit 1a, 1b, 2a, 2b aufweisende Teilsystem (Master-CPU 1 oder Reserve-CPU 2) läuft ohne interne Vergleichsmöglichkeiten - mit ihrer jeweiligen internen zweiten Verarbeitungseinheit 1a, 1b; 2a, 2b - weiter und bleibt ferner mit dem anderen Teilsystem (Master- oder Reserve-CPU 1, 2) im redundanten Betrieb. Damit bleiben zahlreiche HW-Fehler für den Prozess rückwirkungsfrei.

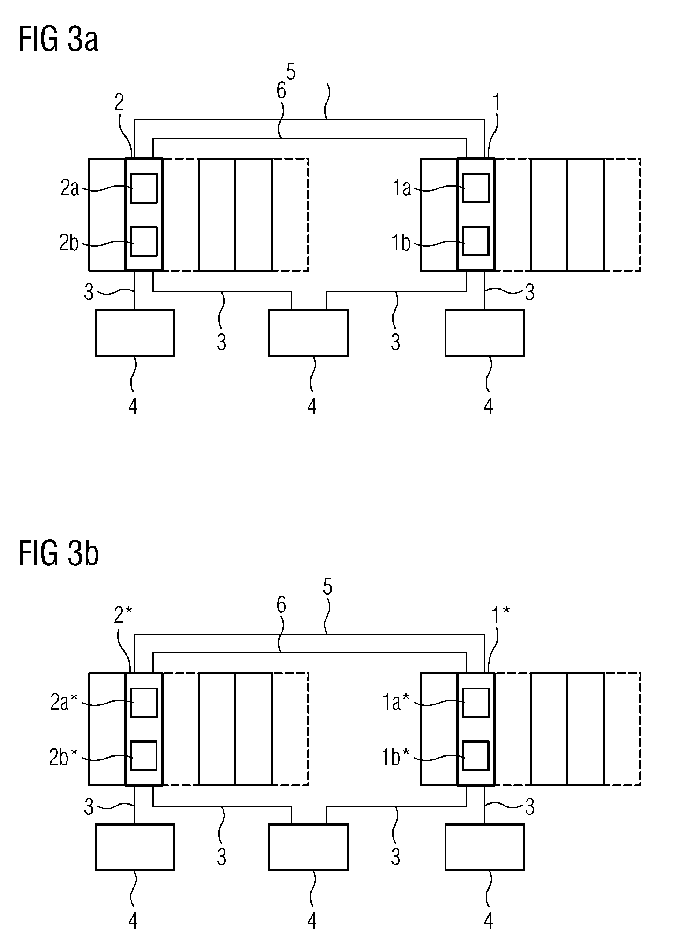

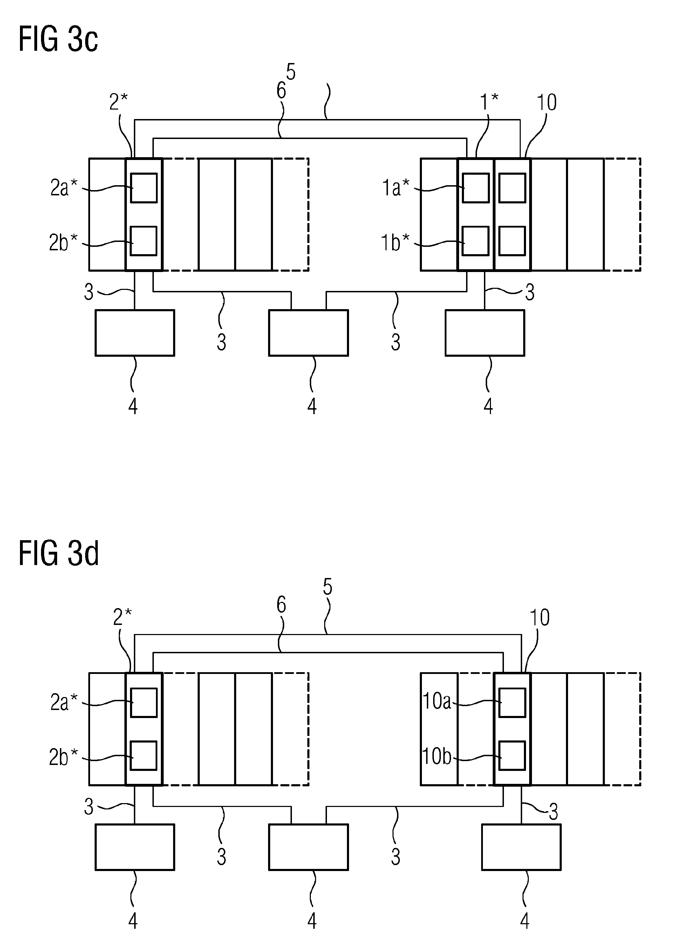

Zur näheren Erläuterung des Betriebsmodus "Austauschen einer Master- oder einer Reserve-CPU 1, 2" wird im Folgenden auf die Figur 3 verwiesen. Dort wird angenommen, dass eine der Verarbeitungseinheiten 1a, 1b - im gezeigten Beispiel die Verarbeitungseinheit 1a - der Master-CPU 1 als defekt erkannt wird (Figuren 3a, 3b) und dadurch die Master-CPU 1 durch eine neue H-CPU 10 zu ersetzen ist (Figuren 3c, 3d). Die Erkennung eines Fehlers in der Verarbeitungseinheit 1a erfolgte mittels des beschriebenen Betriebsmodus "Lokalisieren einer defekten Master- oder Slave-Verarbeitungseinheit 1a, 1b, 2a, 2b der Master- oder der Reserve-CPU 1, 2". Ferner wird angenommen, dass über einen Rückwandbus verbundene Steckplätze zur Aufnahme der H-CPUs 1, 2, 10 sowie von weiteren Baugruppen, beispielsweise Stromversorgungen, Kommunikations-Baugruppen oder I/O-Baugruppen vorgesehen sind. Es wird darauf hingewiesen, dass die Synchronisationsleitungen 5, 6 jeweils mit beiden Verarbeitungseinheiten 1a, 1b, 2a, 2b der Master- und der Reserve-CPU 1, 2 verbunden sind.

Der Austausch der Master-CPU 1 und somit die Reparatur des Automatisierungssystems AS wird mittels folgender Maßnahmen verwirklicht:
1. Die aufgrund der defekten Verarbeitungseinheit 1a defekte Master-CPU 1 wird in die Reserve-Rolle überführt und die Reserve-CPU 2 übernimmt die Master-Funktion des Automatisierungssystems AS(in Figur 3b mit den Bezugszeichen 1*, 1a*, 1b*, 2*, 2a*, 2b* angedeutet).
2. Alle "geschalteten" Dienste, sofern sie noch intakt sind, werden auf der defekten H-CPU 1* in den passiven Modus überführt, wobei alle nicht-redundanten (einseitigen) Dienste oder einseitige Verbindungen noch in Betrieb bleiben.
3. Die neue, zwei Verarbeitungseinheiten 10a, 10b aufweisende H-CPU 10 wird in einen freien Steckplatz gesteckt (Figur 3c).
4. Eine der beiden Synchronisationsleitungen 5, 6 wird von der defekten H-CPU 1* auf die neue H-CPU 10 gesteckt (die Synchronisationsleitungen 5, 6 "arbeiten" ab jetzt mit unterschiedlichen Daten).
5. Die neue H-CPU 10 koppelt sich asynchron über die an sie angeschlossene Synchronisationsleitung 5, 6 an die Master-CPU 2*. Die defekte H-CPU 1* sowie die neue H-CPU 10 befinden sich nun in der Reserve-Rolle.
6. Alle lokalen Interfaces sowie die zweite Synchronisationsleitung 5, 6 der defekten H-CPU 1* werden von der defekten H-CPU 1* auf die neue H-CPU 10 "umgesteckt". Dabei brechen einseitige Dienste ab.
7. Die Interfaces werden auf der neuen H-CPU 10 wieder in Betrieb genommen.
8. Die defekte H-CPU 1 kann entfernt werden (Figur 3d).

Alternativ können im Hinblick auf den Austausch der H-CPU 10 nach der beschriebenen Maßnahme gemäß Punkt 4 folgende Maßnahmen vorgesehen werden:
5*. Die defekte H-CPU 1* und die neue H-CPU 10 werden mittels einer weiteren Synchronisationsleitung temporär miteinander verbunden.
6* Das initiale Update der neuen H-CPU 10 erfolgt ausgehend von der defekten H-CPU 1* (Verarbeitungseinheit 1b der defekten H-CPU 1* ist intakt) über die temporär verbundene Synchronisationsleitung.
7*. Während oder nachdem das initiale Update durchgeführt wurde, empfängt die neue H-CPU 10 mittels der Master-CPU 2* Daten und Freigaben.
8*. Die defekte H-CPU 1 kann entfernt werden.

## Patentansprüche

1. Verfahren zur Erhöhung der Verfügbarkeit eines redundanten mit zwei Teilsystemen versehenen Automatisierungssystems, wobei
- eines der Teilsysteme (1, 2) die Master-Funktion und das andere Teilsystem (1, 2) die Slave- bzw. Reserve-Funktion übernimmt und für den Fall, dass das eine Teilsystem (1, 2) ausfällt, das andere Teilsystem (1, 2) die Master-Funktion übernimmt,
- jedes der Teilsysteme (1, 2) zwei gekoppelte Verarbeitungseinheiten (1a, 1b; 2a, 2b) aufweist,
- innerhalb der Teilsysteme (1, 2) eine der Verarbeitungseinheiten (1a, 1b; 2a, 2b) die Master-Funktion und die andere Verarbeitungseinheit (1a, 1b; 2a, 2b) die Slave-Funktion übernimmt und für den Fall, dass die eine Verarbeitungseinheit (1a, 1b; 2a, 2b) ausfällt, die andere Verarbeitungseinheit (1a, 1b; 2a, 2b) die Master-Funktion übernimmt,
- die beiden Teilsysteme (1, 2) in einer asynchronen Betriebsart Programmpfade zeitlich asynchron durchlaufen, indem das Slave-Teilsystem (2) nur vom Master-Teilsystem (1) freigegebene Programmpfade durchläuft,
- die beiden Verarbeitungseinheiten (1a, 1b; 2a, 2b) jedes Teilsystems (1, 2) entweder
- in einer asynchronen Betriebsart Programmpfade zeitlich asynchron durchlaufen, indem die Slave-Verarbeitungseinheit (1b, 2b) nur durch die Master-Verarbeitungseinheit (1a, 2a) mittels Freigaben freigegebene Programmpfade durchläuft,
oder
- in einer synchronen Betriebsart die Programmpfade zeitlich synchron durchlaufen, indem an Programmstellen, an denen ein Abgleich vorgesehen ist, beide Verarbeitungseinheiten auf eine Antwort der jeweils anderen Verarbeitungseinheit warten und erst dann jeweils ihre Programmverarbeitung fortsetzen,
- in Abhängigkeit eines Betriebsmodus die Verarbeitungseinheiten (1a, 1b; 2a, 2b) der Teilsysteme (1, 2) für die synchrone oder asynchrone Betriebsart konfiguriert werden.

2. Verfahren nach Anspruch 1, **dadurch gekennzeichnet, dass** der Betriebsmodus die Lokalisierung eines Fehlers in den Teilsystemen (1, 2) ist, wobei mittels der Verarbeitungseinheiten (1a, 1b; 2a, 2b) jedes Teilsystems (1, 2) in der synchronen Betriebsart Verarbeitungsergebnisse verglichen werden.

3. Verfahren nach Anspruch 1, **dadurch gekennzeichnet, dass** der Betriebsmodus ein Aufdaten des einen oder des anderen Teilsystems im Rahmen einer Aufdatphase ist, wobei
- mittels der Slave-Verarbeitungseinheit (1b) des relevanten Daten aufweisenden Teilsystems (1),
- während der Prozesssteuerung durch die Master-Verarbeitungseinheit (1a) dieses Teilsystems (1) zunächst ein Zustandsabbild der Slave-Verarbeitungseinheit (1b) erzeugt wird und anschließend in der asynchronen Betriebsart die freigegebenen Programmpfade durchlaufen werden, und
- in der asynchronen Betriebsart das Zustandsabbild und die Freigaben dem aufzudatenden Teilsystem (2) übermittelt werden,
und
- mittels der Verarbeitungseinheiten (2a, 2b) des aufzudatenden Teilsystems (2) das Zustandsabbild und die Freigaben in der asynchronen Betriebsart empfangen und die freigegebenen Programmpfade durchlaufen werden.

4. Verfahren nach Anspruch 1, **dadurch gekennzeichnet, dass** der Betriebsmodus ein Updaten der Firmware in den Verarbeitungseinheiten (1a, 1b; 2a, 2b) der Teilsysteme (1, 2) ist, wobei
- die Master-Verarbeitungseinheit (1a) des Master-Teilsystems (1) und die Master-Verarbeitungseinheit (2a) des Reserve-Teilsystems (2) asynchron gekoppelt werden, wobei die Master-Verarbeitungseinheit (1a) des Master-Teilsystems (1) den Prozess steuert,
- eine mittels eines Engineering-Systems übermittelte neue Firmware in die Master- und Slave-Teilsysteme (1, 2) hinterlegt und in die Slave-Verarbeitungseinheiten (1b, 2b) geladen wird,
- zum Aufdaten der jeweiligen Slave-Verarbeitungseinheit (1b, 2b) diese durch die jeweilige Master-Verarbeitungseinheit (1a, 2a) mit relevanten Daten versorgt wird, wobei die Master- und die Slave-Verarbeitungseinheiten (1a, 2a; 1b, 2b) synchron gekoppelt werden,
- die Slave-Verarbeitungseinheit (1b) des Master-Teilsystems (1) die Prozesssteuerung übernimmt und mit der Slave-Verarbeitungseinheit (2b) des Slave-Teilsystems (2) im redundanten Betrieb ist,
- die neue Firmware in die jeweilige Master-Verarbeitungseinheit (1a, 2a) geladen wird,
- zum Aufdaten der jeweilige Master-Verarbeitungseinheit (1a, 2a) diese durch die jeweilige Slave-Verarbeitungseinheit (1b, 2b) mit relevanten Daten versorgt wird, wobei die Master- und die Slave-Verarbeitungseinheiten (1a, 2a; 1b, 2b) synchron gekoppelt werden.

5. Verfahren nach Anspruch 1, **dadurch gekennzeichnet, dass** der Betriebsmodus ein Lokalisieren und Beheben von transienten Fehlern an Außenschnittstellen der Teilsysteme (1, 2) ist, wobei
- mittels der Master- und Slave-Verarbeitungseinheiten (1a, 1b; 2a, 2b) des jeweiligen Teilsystems an Außenschnittstellen übermittelte Ausgaben des jeweiligen Teilsystems (1, 2) verglichen werden,
- für den Fall, dass die Ausgaben der Master- und der Slave-Verarbeitungseinheit (1a, 1b) des Master-Teilsystems (1) ungleich sind,
- mittels des Master-Teilsystems (1) in der asynchronen Betriebsart die Master-Ausgaben und Freigaben dem Reserve-Teilsystem (2) übermittelt werden,
- mittels des Reserve-Teilsystems (2) die Reserve-Ausgaben dem Master-Teilsystem (1) übermittelt werden,
- mittels der Master- und der Slave-Verarbeitungseinheit (1a, 1b) des Master-Teilsystems (1) deren jeweiligen Ausgaben mit denen des Reserve-Teilsystems (2) verglichen werden, wobei mittels der Master- oder der Slave-Verarbeitungseinheit (1a, 1b) des Master-Teilsystems (1) die Ausgaben des Reserve-Teilsystems (2) übernommen werden, falls die Ausgaben der Master- oder der Slave-Verarbeitungseinheit (1a, 1b) des Master-Teilsystems (1) von den Ausgaben des Reserve-Teilsystems (2) abweichen,
- für den Fall, dass die Ausgaben der Master- und der Slave-Verarbeitungseinheit (2a, 2b) des Reserve-Teilsystems (2) ungleich sind,
- mittels der Master- und der Slave-Verarbeitungseinheit (2a, 2b) des Reserve-Teilsystems (2) deren jeweiligen Ausgaben mit denen von dem Master-Teilsystem (1) übermittelten Ausgaben verglichen werden, wobei mittels der Master- oder der Slave-Verarbeitungseinheit (2a, 2b) des Reserve-Teilsystems (2) die Ausgaben des Master-Teilsystems (1) übernommen werden, falls die Ausgaben der Master- oder der Slave-Verarbeitungseinheit (2a, 2b) des Reserve-Teilsystems (2) von den Ausgaben des Master-Teilsystems (1) abweicht.

6. Verfahren nach Anspruch 1, **dadurch gekennzeichnet, dass** der Betriebsmodus ein Lokalisieren und Beheben von transienten Fehlern in Arbeitsspeichern der Teilsysteme (1, 2) ist, wobei
- die Master- und die Slave- Verarbeitungseinheiten (1a, 1b; 2a, 2b) des Master- und des Reserve-Teilsystems (1, 2) abschnittsweise Speichertests in ihren jeweiligen Arbeitsspeicher durchführen, wobei über jeden Speicherabschnitt Hash-Werte gebildet werden,
- für den Fall, dass die Hash-Werte der Master- und der Slave-Verarbeitungseinheit (1a, 1b) des Master-Teilsystems (1) ungleich sind,
- mittels des Master-Teilsystems (1) in der asynchronen Betriebsart dessen Hash-Werte und Freigaben dem Reserve-Teilsystem (2) übermittelt werden,
- mittels des Reserve-Teilsystems (2) dessen Hash-Werte dem Master-Teilsystem (1) übermittelt werden,
- mittels der Master- und der Slave-Verarbeitungseinheit (1a, 1b) des Master-Teilsystems (1) zur Lokalisierung des fehlerhaften Speicherabschnitts ihre jeweiligen Hash-Werte mit denen des Reserve-Teilsystems (2) verglichen werden,
- mittels der Master- oder der Slave-Verarbeitungseinheit (1a, 1b) des Master-Teilsystems (1) der Inhalt der Speicherabschnitte des Reserve-Teilsystems (2) übernommen werden, falls die Hash-Werte der Master- oder der Slave-Verarbeitungseinheit (1a, 1b) des Master-Teilsystems (1) von den Hash-Werten des Reserve-Teilsystems (2) abweichen,
- für den Fall, dass die Hash-Werte der Master- und der Slave-Verarbeitungseinheit (2a, 2b) des Reserve-Teilsystems (2) ungleich sind,
- mittels der Master- und der Slave-Verarbeitungseinheit (2a, 2b) des Slave-Teilsystems (2) deren jeweilige Hash-Werte mit den von dem Master-Teilsystem (1) übermittelten Hash-Werten verglichen werden, wobei mittels der Master- oder der Slave-Verarbeitungseinheit (2a, 2b) des Reserve-Teilsystems (2) der Inhalt der Speicherabschnitte des Master-Teilsystems (1) übernommen wird, falls die Hash-Werte der Master- oder der Slave-Verarbeitungseinheit (2a, 2b) des Reserve-Teilsystems (2) von den Hash-Werten des Master-Teilsystems (1) abweichen.

7. Verfahren nach Anspruch 1, **dadurch gekennzeichnet, dass** der Betriebsmodus ein Lokalisieren einer defekten Master- oder Slave-Verarbeitungseinheit (1a, 1b; 2a, 2b) des Master- oder des Reserve-Teilsystems (1, 2) ist, wobei
a. mittels der Master- und Slave-Verarbeitungseinheiten (1a, 1b; 2a, 2b) des jeweiligen Teilsystems an Außenschnittstellen übermittelte Ausgaben des jeweiligen Teilsystems (1, 2) verglichen werden,
b. für den Fall, dass die Ausgaben der Master- und der Slave-Verarbeitungseinheit (1a, 1b) des Master-Teilsystems (1) ungleich sind,
c. mittels des Master-Teilsystems (1) in der asynchronen Betriebsart die Master-Ausgaben und Freigaben dem Reserve-Teilsystem (2) übermittelt werden,
d. mittels des Reserve-Teilsystems (2) die Reserve-Ausgaben dem Master-Teilsystem (1) übermittelt werden,
e. mittels der Master- und der Slave-Verarbeitungseinheit (1a, 1b) des Master-Teilsystems (1) deren jeweilige Ausgaben mit denen des Reserve-Teilsystems (2) verglichen werden, wobei für den Fall, dass die Ausgaben der Master- oder der Slave-Verarbeitungseinheit (1a, 1b) des Master-Teilsystems (1) von den Ausgaben des Reserve-Teilsystems (2) abweicht, die Schritte a. bis e. für eine vorgegebene Anzahl wiederholt werden,
f. Deaktivieren der Master- oder der Slave-Verarbeitungseinheit (1a, 1b) des Master-Teilsystems (1) in Abhängigkeit der vorgegebenen Anzahl der Abweichungen,
g. für den Fall, dass die Ausgaben der Master- und der Slave-Verarbeitungseinheit (2a, 2b) des Reserve-Teilsystems (2) ungleich sind,
h. mittels der Master- und der Slave-Verarbeitungseinheit (2a, 2b) des Reserve-Teilsystems (2) deren jeweilige Ausgaben mit den von dem Master-Teilsystem (1) übermittelten Ausgaben verglichen werden, wobei für den Fall, dass die Ausgaben der Master- oder der Slave-Verarbeitungseinheit (2a, 2b) des Reserve-Teilsystems (2) von den Ausgaben des Master-Teilsystems (1) abweichen, die Schritte a., g. und h., für eine vorgegebene Anzahl wiederholt werden,
i. Deaktivieren der Master- oder der Slave-Verarbeitungseinheit (2a, 2b) des Reserve-Teilsystems (2) in Abhängigkeit der vorgegebenen Anzahl der Abweichungen.

8. Verfahren nach Anspruch 1, **dadurch gekennzeichnet, dass** der Betriebsmodus das Austauschen des Master- oder des Reserve-Teilsystems (1, 2) ist, wobei
- die beiden Teilsysteme (1, 2) über zwei Synchronisationsleitungen (5, 6) miteinander verbunden sind,
- für den Fall, dass das auszutauschende Teilsystem (1) als Master fungiert hat, wird die Masterfunktion von dem Reserve-Teilsystem (2) übernommen,
- eine der beiden Synchronisationsleitungen (5) von dem auszutauschenden Teilsystem (1) getrennt und mit einem neuen, eine Master- und eine Slave-Verarbeitungseinheit (10a, 10b) aufweisenden Teilsystem (10) verbunden wird,
- das neue Teilsystem (10) über die eine Synchronisationsleitung (5) asynchron an das als Master fungierende Teilsystem (2*) angekoppelt wird,
- die andere Synchronisationsleitung (6) sowie weitere lokale Interfaces des auszutauschenden Teilsystems (1) von diesem getrennt und mit dem neuen Teilsystem (10) verbunden werden,
- die Interfaces in Betrieb genommen werden.

9. Verfahren nach Anspruch 1, **dadurch gekennzeichnet, dass** der Betriebsmodus das Austauschen eines der beiden Teilsysteme (1, 2) ist, wobei
- die beiden Teilsysteme (1, 2) über zwei Synchronisationsleitungen (5, 6) miteinander verbunden sind,
- für den Fall, dass das auszutauschende Teilsystem als Master-Teilsystem (1) fungiert hat, die Masterfunktion von dem Reserve-Teilsystem (2) übernommen wird,
- eine der beiden Synchronisationsleitungen (5) von dem auszutauschenden Teilsystem (1) getrennt und mit einem neuen, eine Master- und eine Slave-Verarbeitungseinheit (10a, 10b) aufweisenden Teilsystem (10) verbunden wird,
- das neue Teilsystem (10) und das auszutauschende Teilsystem (1, 2) temporär über eine weitere Synchronisationsleitung verbunden werden,
- der neue Teilnehmer (10) von der intakten Verarbeitungseinheit (1a, 1b) des auszutauschenden Teilnehmers (1) über die weitere Synchronisationsleitung aufgedatet wird,
- während oder nach dem Updaten des neuen Teilnehmers (10) dem neuen Teilnehmer (10) von dem als Master fungierenden Teilnehmer (2*) Freigaben und relevante Daten übermittelt werden.

10. Verfahren nach Anspruch 1, **dadurch gekennzeichnet, dass** in Abhängigkeit des Betriebsmodus der Teilsysteme (1, 2) die beiden Teilsysteme (1, 2) ferner für eine synchrone Betriebsart konfigurierbar sind, in der die Programmpfade zeitlich synchron durchlaufen werden, indem an Programmstellen, an denen ein Abgleich vorgesehen ist, beide Teilsysteme auf eine Antwort des jeweils anderen Teilnehmers warten und erst dann jeweils ihre Programmverarbeitung fortsetzen.

11. Redundantes mit zwei Teilsystemen versehenes Automatisierungssystem, wobei
- eines der Teilsysteme (1, 2) die Master-Funktion und das andere Teilsystem (1, 2) die Slave- bzw. Reserve-Funktion übernimmt und für den Fall, dass das eine Teilsystem (1, 2) ausfällt, das andere Teilsystem (1, 2) die Master-Funktion übernimmt,
- jedes der Teilsysteme (1, 2) zwei gekoppelte Verarbeitungseinheiten (1a, 1b; 2a, 2b) aufweist,
- innerhalb der Teilsysteme (1, 2) eine der Verarbeitungseinheiten (1a, 1b; 2a, 2b) die Master-Funktion und die andere Verarbeitungseinheit (1a, 1b; 2a, 2b) die Slave-Funktion übernimmt und für den Fall, dass die eine Verarbeitungseinheit (1a, 1b; 2a, 2b) ausfällt, die andere Verarbeitungseinheit (1a, 1b; 2a, 2b) die Master-Funktion übernimmt, wobei
- die beiden Teilsysteme (1, 2) dazu ausgebildet sind, in einer asynchronen Betriebsart Programmpfade zeitlich asynchron zu durchlaufen, indem das Reserve-Teilsystem (2) nur durch das Master-Teilsystem (1) freigegebene Programmpfade durchläuft,
- die beiden Verarbeitungseinheiten (1a, 1b; 2a, 2b) jedes Teilsystems (1, 2) dazu ausgebildet sind, entweder
- in einer asynchronen Betriebsart Programmpfade zeitlich asynchron zu durchlaufen, indem die Slave-Verarbeitungseinheit (1b, 2b) nur durch die Master-Verarbeitungseinheit (1a, 2a) mittels Freigaben freigegebene Programmpfade durchläuft, oder
- in einer synchronen Betriebsart die Programmpfade zeitlich synchron zu durchlaufen, indem an Programmstellen, an denen ein Abgleich vorgesehen ist, beide Verarbeitungseinheiten auf eine Antwort der jeweils anderen Verarbeitungseinheit warten und erst dann jeweils ihre Programmverarbeitung fortsetzen,
- in Abhängigkeit eines Betriebsmodus die Verarbeitungseinheiten (1a, 1b; 2a, 2b) der Teilsysteme (1, 2) für die synchrone oder asynchrone Betriebsart konfigurierbar sind.

12. Redundantes Automatisierungssystem nach Anspruch 11, **dadurch gekennzeichnet, dass** der Betriebsmodus die Lokalisierung eines Fehlers in den Teilsystemen (1, 2) ist, wobei die Verarbeitungseinheiten (1a, 1b; 2a, 2b) jedes Teilsystems (1, 2) dazu ausgebildet sind, in der synchronen Betriebsart Verarbeitungsergebnisse zu vergleichen.

13. Redundantes Automatisierungssystem nach Anspruch 11, **dadurch gekennzeichnet, dass** der Betriebsmodus ein Aufdaten des einen oder des anderen Teilsystems im Rahmen einer Aufdatphase ist, wobei
- die Slave-Verarbeitungseinheit (1b) des relevante Daten aufweisenden Teilsystems (1) dazu ausgebildet ist,
- während der Prozesssteuerung durch die Master-Verarbeitungseinheit (1a) dieses Teilsystems (1) zunächst ein Zustandsabbild der Slave-Verarbeitungseinheit (1b) zu erzeugen und anschließend in der asynchronen Betriebsart die freigegebenen Programmpfade zu durchlaufen, und
- in der asynchronen Betriebsart das Zustandsabbild und die Freigaben dem aufzudatenden Teilsystem (2) zu übermitteln,
und
- die Verarbeitungseinheiten (2a, 2b) des aufzudatenden Teilsystems (2) dazu ausgebildet sind, das Zustandsabbild und die Freigaben in der asynchronen Betriebsart zu empfangen und die die freigegebenen Programmpfade zu durchlaufen.

14. Redundantes Automatisierungssystem nach Anspruch 11, **dadurch gekennzeichnet, dass** der Betriebsmodus ein Updaten der Firmware in den Verarbeitungseinheiten (1a, 1b; 2a, 2b) der Teilsysteme (1, 2) ist, wobei die Teilsysteme (1, 2) und die Verarbeitungseinheiten (1a, 1b; 2a, 2b) zur Verwirklichung folgender Schritte ausgebildet sind:
- die Master-Verarbeitungseinheit (1a) des Master-Teilsystems (1) und die Master-Verarbeitungseinheit (2a) des Reserve-Teilsystems (2) werden asynchron gekoppelt, wobei die Master-Verarbeitungseinheit (1a) des Master-Teilsystems (1) den Prozess steuert,
- eine von einem Engineering-System übermittelte neue Firmware wird in die Master- und Reserve-Teilsysteme (1, 2) hinterlegt und in die Slave-Verarbeitungseinheiten (1b, 2b) geladen,
- zum Aufdaten der jeweiligen Slave-Verarbeitungseinheit (1b, 2b) wird diese durch die jeweilige Master-Verarbeitungseinheit (1a, 1b) mit relevanten Daten versorgt, wobei die Master- und die Slave-Verarbeitungseinheiten (1a, 2a; 1b, 2b) synchron gekoppelt sind,
- die Slave-Verarbeitungseinheit (1b) des Master-Teilsystems (1) übernimmt die Prozesssteuerung und ist mit der Slave-Verarbeitungseinheit (2b) des Reserve-Teilsystems (2) im redundanten Betrieb,
- die neue Firmware wird in die jeweilige Master-Verarbeitungseinheit (1a, 1b) geladen,
- zum Aufdaten der jeweiligen Master-Verarbeitungseinheit (1a, 2a) wird diese durch die jeweilige Slave-Verarbeitungseinheit (2a, 2b) mit relevanten Daten versorgt, wobei die Master- und die Slave-Verarbeitungseinheiten (1a, 2a; 1b, 2b) synchron gekoppelt sind.

15. Redundantes Automatisierungssystem nach Anspruch 11, **dadurch gekennzeichnet, dass** der Betriebsmodus ein Lokalisieren und Beheben von transienten Fehlern an Außenschnittstellen der Teilsysteme (1, 2) ist, wobei die Teilsysteme (1, 2) und die Verarbeitungseinheiten (1a, 1b; 2a, 2b) zur Verwirklichung folgender Schritte ausgebildet sind:
- die Master- und Slave-Verarbeitungseinheiten (1a, 1b; 2a, 2b) des jeweiligen Teilsystems vergleichen an Außenschnittstellen übermittelte Ausgaben des jeweiligen Teilsystems (1, 2),
- für den Fall, dass die Ausgaben der Master- und der Slave-Verarbeitungseinheit (1a, 1b) des Master-Teilsystems (1) ungleich sind,
- übermittelt das Master-Teilsystem (1) in der asynchronen Betriebsart seine Ausgaben und Freigaben dem Reserve-Teilsystem (2),
- das Reserve-Teilsystem (2) übermittelt seine Ausgaben dem Master-Teilsystem (1),
- die Master- und Slave-Verarbeitungseinheit (1a, 1b) des Master-Teilsystems (1) vergleichen ihre jeweiligen Ausgaben mit denen des Reserve-Teilsystems (2), wobei die Master- oder die Slave-Verarbeitungseinheit (1a, 1b) des Master-Teilsystems (1) die Ausgaben des Reserve-Teilsystems (2) übernimmt, falls die Ausgaben der Master- oder der Slave-Verarbeitungseinheit (1a, 1b) des Master-Teilsystems (1) von den Ausgaben des Reserve-Teilsystems (2) abweicht,
- für den Fall, dass die Ausgaben der Master- und der Slave-Verarbeitungseinheit (2a, 2b) des Reserve-Teilsystems (2) ungleich sind,
- vergleichen die Master- und Slave-Verarbeitungseinheit (2a, 2b) des Reserve-Teilsystems (2) ihre jeweiligen Ausgaben mit den von des Master-Teilsystems (1) übermittelten Ausgaben, wobei die Master- oder die Slave-Verarbeitungseinheit (2a, 2b) des Reserve-Teilsystems (2) die Ausgaben des Master-Teilsystems (1) übernimmt, falls die Ausgaben der Master- oder der Slave-Verarbeitungseinheit (2a, 2b) des Reserve-Teilsystems (2) von den Ausgaben des Master-Teilsystems (1) abweicht.

16. Redundantes Automatisierungssystem nach Anspruch 11, **dadurch gekennzeichnet, dass** der Betriebsmodus ein Lokalisieren und Beheben von transienten Fehlern in Arbeitsspeichern der Teilsysteme (, 2) ist, wobei die Teilsysteme (1, 2) und die Verarbeitungseinheiten (1a, 1b; 2a, 2b) zur Verwirklichung folgender Schritte ausgebildet sind:
- die Master- und die Slave- Verarbeitungseinheiten (1a, 1b; 2a, 2b) des Master- und des Reserve-Teilsystems (1, 2) führen abschnittsweise Speichertests in ihren jeweiligen Arbeitsspeichern durch, wobei über jeden Speicherabschnitt Hash-Werte gebildet werden,
- für den Fall, dass die Hash-Werte der Master- und der Slave-Verarbeitungseinheit (1a, 1b) des Master-Teilsystems (1) ungleich sind,
- übermittelt das Master-Teilsystem (1) in der asynchronen Betriebsart seine Hash-Werte und Freigaben dem Reserve-Teilsystem (2),
- das Reserve-Teilsystem (2) übermittelt seine Hash-Werte dem Master-Teilsystem (1),
- die Master- und die Slave-Verarbeitungseinheit (1a, 1b) des Master-Teilsystems (1) vergleichen zur Lokalisierung des fehlerhaften Speicherabschnitts ihre jeweiligen Hash-Werte mit denen des Reserve-Teilsystems (2),
- die Master- oder die Slave-Verarbeitungseinheit (1a, 1b) des Master-Teilsystems (1) den Inhalt der Speicherabschnitte des Reserve-Teilsystems (1) übernehmen, falls die Hash-Werte der Master- oder der Slave-Verarbeitungseinheit (1a, 1b) des Master-Teilsystems (1) von den Hash-Werten des Reserve-Teilsystems (2) abweichen,
- für den Fall, dass die Hash-Werte der Master- und der Slave-Verarbeitungseinheit (2a, 2b) des Reserve-Teilsystems (2) ungleich sind,
- vergleichen die Master- und Slave-Verarbeitungseinheit (2a, 2b) des Reserve-Teilsystems (2) ihre jeweiligen Hash-Werte mit den von dem Master-Teilsystem (1) übermittelten Hash-Werten, wobei die Master- oder die Slave-Verarbeitungseinheit (2a, 2b) des Reserve-Teilsystems (2) den Inhalt der Speicherabschnitte des Master-Teilsystems (1) übernimmt, falls die Hash-Werte der Master- oder der Slave-Verarbeitungseinheit (2a, 2b) des Reserve-Teilsystems (2) von den Hash-Werten des Master-Teilsystems (1) abweichen.

17. Redundantes Automatisierungssystem nach Anspruch 11, **dadurch gekennzeichnet, dass** der Betriebsmodus ein Lokalisieren einer defekten Master- oder Slave-Verarbeitungseinheit (1a, 1b; 2a, 2b) des Master- oder des Reserve-Teilsystems (1, 2) ist, wobei die Teilsysteme (1, 2) und die Verarbeitungseinheiten (1a, 1b; 2a, 2b) zur Verwirklichung folgender Schritte ausgebildet sind:
a. die Master- und Slave-Verarbeitungseinheiten (1a, 1b; 2a, 2b) des jeweiligen Teilsystems (1, 2) vergleichen an Außenschnittstellen übermittelte Ausgaben des jeweiligen Teilsystems (1, 2),
b. für den Fall, dass die Ausgaben der Master- und der Slave-Verarbeitungseinheit (1a, 1b) des Master-Teilsystems (1) ungleich sind,
c. übermittelt das Master-Teilsystem (1) in der asynchronen Betriebsart die Master-Ausgaben und Freigaben dem Reserve-Teilsystem (2),
d. übermittelt das Reserve-Teilsystem (2) die Reserve-Ausgaben dem Master-Teilsystem (1),
e. vergleichen die Master- und die Slave-Verarbeitungseinheit (1a, 1b) des Master-Teilsystems (1) ihre jeweilige Ausgaben mit denen des Reserve-Teilsystems (2), wobei für den Fall, dass die Ausgaben der Master- oder der Slave-Verarbeitungseinheit (1a, 1b) des Master-Teilsystems (1) von den Ausgaben des Reserve-Teilsystems (2) abweichen, die Schritte a. bis e. für eine vorgegebene Anzahl wiederholt werden,
f. Deaktivieren der Master- oder der Slave-Verarbeitungseinheit (1a, 1b) des Master-Teilsystems (1) in Abhängigkeit der vorgegebenen Anzahl der Abweichungen,
g. für den Fall, dass die Ausgaben der Master- und der Slave-Verarbeitungseinheit (2a, 2b) des Reserve-Teilsystems (2) ungleich sind,
h. vergleichen die Master- und die Slave-Verarbeitungseinheit (2a, 2b) des Reserve-Teilsystems (2) ihre jeweiligen Ausgaben mit den von dem Master-Teilsystem (1) übermittelten Ausgaben, wobei für den Fall, dass die Ausgaben der Master- oder der Slave-Verarbeitungseinheit (2a, 2b) des Reserve-Teilsystems (2) von den Ausgaben des Master-Teilsystems (1) abweichen, die Schritte a., g. und h., für eine vorgegebene Anzahl wiederholt werden,
i. Deaktivieren der Master- oder der Slave-Verarbeitungseinheit (2a, 2b) des Slave-Teilsystems (2) in Abhängigkeit der vorgegebenen Anzahl der Abweichungen.

18. Redundantes Automatisierungssystem nach Anspruch 11, **dadurch gekennzeichnet, dass** die beiden Teilsysteme (1, 2) ferner dazu ausgebildet sind, in einer synchronen Betriebsart die Programmpfade zeitlich synchron zu durchlaufen, indem an Programmstellen, an denen ein Abgleich vorgesehen ist, beide Teilsysteme auf eine Antwort des jeweils anderen Teilnehmers warten und erst dann jeweils ihre Programmverarbeitung fortsetzen, wobei in Abhängigkeit des Betriebsmodus die Teilsysteme (1, 2) für die synchrone oder asynchrone Betriebsart konfigurierbar sind.
